(19)

**Europäisches Patentamt**

**European Patent Office**

**Office européen des brevets**

(11) **EP 4 417 815 A1**

(12) **EUROPEAN PATENT APPLICATION**
published in accordance with Art. 153(4) EPC

(43) Date of publication:
**21.08.2024 Bulletin 2024/34**

(21) Application number: **22880801.0**

(22) Date of filing: **30.09.2022**

(51) International Patent Classification (IPC):
**F04D 15/00** *(2006.01)* **F04D 27/00** *(2006.01)*

(52) Cooperative Patent Classification (CPC):
**F04D 15/00; F04D 27/00**

(86) International application number:
**PCT/JP2022/036620**

(87) International publication number:
**WO 2023/063105 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.10.2021 JP 2021168506**

(71) Applicant: **EBARA CORPORATION**
**Ota-ku,**
**Tokyo 144-8510 (JP)**

(72) Inventors:
• **OZAWA, Takahide**
**Tokyo 144-8510 (JP)**

• **NISHIMURA, Kazuma**
**Tokyo 144-8510 (JP)**
• **KOMATSU, Tatsumi**
**Tokyo 144-8510 (JP)**
• **YAMADA, Yasumasa**
**Tokyo 144-8510 (JP)**
• **SAKAMAKI, Yuta**
**Tokyo 144-8510 (JP)**
• **PARK, Hyunwoo**
**Tokyo 144-8510 (JP)**

(74) Representative: **Wimmer, Hubert**
**Wagner & Geyer Partnerschaft mbB**
**Patent- und Rechtsanwälte**
**Gewürzmühlstrasse 5**
**80538 München (DE)**

(54) **FLUID MACHINE SYSTEM, INFORMATION PROCESSING DEVICE, AND INFORMATION PROCESSING METHOD**

(57) There are provided an acquirer that acquires a discharge flow rate of a target pump in addition to model identification information of the target pump, or acquires a set of discharge pressure, suction pressure, and a cage height in addition to the model identification information of the target pump, and a determiner that, in a case where the discharge flow rate of the target pump is acquired, specifies a total lift corresponding to the discharge flow rate with reference to characteristic data corresponding to the model identification information of the target pump, and determines an operation frequency of an inverter by performing collation with characteristic data of the total lift and the discharge flow rate for each operation frequency in a case where a synchronous motor operates the pump, such that the discharge flow rate and the lift are obtained, or in a case where the set of the discharge pressure, the suction pressure, and the cage height is acquired, determines the total lift by using the discharge pressure, the suction pressure, and the cage height, specifies the discharge flow rate corresponding to the total lift in the characteristic data of the total lift and the discharge flow rate in a case where an induction motor operates the pump, and determines the operation frequency of the inverter by performing collation with the characteristic data of the total lift and the discharge flow rate for each operation frequency in a case where the synchronous motor operates the pump, such that the discharge flow rate and the lift are obtained.

# FIG. 1

EXCESSIVE
PERFORMANCE

CURRENT
MATCHING

APPROPRIATE
PERFORMANCE

L3

P1

L1

TOTAL LIFT

P2

L4

L2

PIPE RESISTANCE
(VALVE ADJUSTED)

PIPE RESISTANCE
(VALVE FULLY OPENED)

CURRENT FLOW RATE

L5

P3

CONSUMED POWER
(EXCESSIVE)

P4    L6

INPUT POWER

(APPROPRIATE)

CURRENT

**Description**

Technical Field

The present invention relates to a fluid machine system, an information processing device, and an information processing method.

Background Art

There is a water supply device that is installed in a building such as an apartment building or an office building, and supplies water to each water supply end. A pump used in such a water supply device is mechanically connected to a motor via a coupling, and by driving the motor, the pump rotates to supply water. In an inexpensive water supply device, in many cases, a pump is driven by using an induction motor that may be operated at a frequency of a power source only by directly connecting an AC power source to the motor without using an inverter.

In this case, an operation frequency of the motor is determined by the frequency of the power supplied to the induction motor. The motor is operated at 50 Hz in a region where the frequency of the power source is 50 Hz, and the motor is operated at 60 Hz in a region where the frequency of the power source is 60 Hz. Therefore, because a pump rotation speed also varies depending on the power source frequency, the pump to be used is also selected in accordance with the power source frequency. In the region where the power source frequency is 50 Hz, a pump for the 50 Hz region, which is optimum when the motor is powered at 50 Hz, is selected. A synchronous speed of a two-pole induction motor is, for example, 3000 rpm in the region where the power source frequency is 50 Hz is, and is 3600 rpm in the region where the power source frequency is 60 Hz.

Although the pump has been described above, similar events have also occurred in an induction motor used to drive a fan of a blower.

Citation List

Patent Literature

    Patent Literature 1: JP 2005-171788 A
    Patent Literature 2: JP 2021-87300 A

Summary of Invention

Technical Problem

In such a water supply device, the pump rotates at a fixed rotation speed depending on the power source frequency, and thus water flows more than necessary. Therefore, normally, a valve for adjusting a flow rate (or pressure) is provided on a discharge-side pipe of the water supply device, and the valve is used by manually changing an opening degree of the valve to adjust the flow rate (pressure) to a necessary flow rate (pressure). As described above, when the pump is rotated at the fixed speed and an operation point is adjusted by the discharge-side valve, an energy loss occurs in the valve and excess energy is consumed.

In such a water supply device, if an inverter device is used when the motor is driven, the rotation speed of the motor can be controlled at a variable speed, so that the pump can be operated at any rotation speed. Therefore, the flow rate (or pressure) can be adjusted without installing a valve that needs to be adjusted on the discharge-side of the water supply device.

However, in order to set the rotation speed to an appropriate operation point, it is necessary to change the rotation speed while checking a flowmeter or a pressure gauge on the discharge side, which is a burden on an operator.

A similar problem occurs in the blower. In the case of the blower, the fan rotates at a fixed rotation speed depending on the power source frequency, and thus an air volume flows more than necessary. Therefore, normally, a damper for adjusting a wind speed (or pressure) is provided on a discharge-side pipe of the blower. The wind speed (pressure) is adjusted to a required wind speed (pressure) by manually changing an opening degree of the damper. As described above, also in the case of the blower, when the fan is rotated at a fixed speed and the operation point is adjusted by the discharge-side damper, an energy loss occurs in the damper and excess energy is consumed.

Also in the case of the blower, if an inverter device is used when the motor is driven, the rotation speed of the motor can be controlled at a variable speed, so that the fan can be operated at any rotation speed. Therefore, the wind speed (or pressure) can be adjusted without installing an adjustment damper on the discharge side of the blower.

However, also in the case of the blower, in order to set the rotation speed to an appropriate operation point, it is necessary to change the rotation speed while checking an anemometer or the pressure gauge on the discharge side, which is a burden on the operator. As described above, when an induction motor used in a fluid machine (for example, a pump or a blower) including a rotor blade is replaced with a synchronous motor, setting the rotation speed to an appropriate operation point is a burden on the operator.

The present invention has been made in view of the above problems, and an object of the present invention is to provide a fluid machine system, an information processing device, and an information processing method capable of reducing a burden on an operator when an induction motor used in a fluid machine (for example, a pump or a blower) including a rotor blade is replaced with a synchronous motor.

Solution to Problem

Advantageous Effects of Invention

According to an aspect of the present invention, in a case where model identification information (for example, a pump model code and a blower model code) of a target fluid machine (for example, a pump and a blower) and a set of discharge pressure, suction pressure, and a cage height (or a discharge flow rate or a discharge air volume) are acquired, an operation frequency for operating at the same operation point can be automatically set after the induction motor is replaced with an inverter-integrated motor (for example, an inverter-integrated PM motor). Therefore, it is possible to reduce the time and effort required for an operator at the time of replacing a fluid machine (for example, a pump and a blower) to adjust the operation while changing the operation frequency, and it is possible to easily perform the operation at the operation point where the energy saving effect is improved.

Brief Description of Drawings

Fig. 1 is a schematic diagram of a relationship between a total lift and a flow rate and a relationship between input power and the flow rate in a case where the flow rate is adjusted by a valve and in a case where the flow rate is adjusted by speed control.

Fig. 2 is a schematic diagram of the relationship between the total lift and the flow rate and the relationship between the input power and the flow rate in a case where the flow rate is excessively large.

Fig. 3 is a schematic configuration diagram of a pump system after replacement of a motor according to a first embodiment.

Fig. 4 is a schematic configuration diagram of an information processing device according to the first embodiment.

Fig. 5 is an example of a table T1 stored in a storage.

Fig. 6 is an example of a table T2 for each operation frequency, which is stored in the storage.

Fig. 7 is a schematic diagram for describing flow rate measurement.

Fig. 8 is a schematic diagram for describing a method of estimating a discharge flow rate.

Fig. 9 is a comparison of an example of characteristics between a case where motors are separated at 50/60 Hz and a case where the motors are set both at 50/60 Hz.

Fig. 10 is a comparison of an example of characteristics between a case where both a motor and a pump are separated at 50 Hz and 60 Hz and a case where pumps for 50 Hz and 60 Hz are applied to a motor for 60 Hz.

Fig. 11 is an example of characteristics of a first example in which application to pumps for 50 Hz and 60 Hz is performed for a 50 Hz/60 Hz dual motor.

Fig. 12 is an example of characteristics of a second example in which application to pumps for 50 Hz and 60 Hz is performed for a 50 Hz/60 Hz dual motor.

Fig. 13 is a schematic diagram for describing weak field control.

Fig. 14 is a schematic diagram of a relationship between static pressure and an air volume and a relationship between the input power and the air volume, in a case where the air volume is adjusted by a damper and in a case where the air volume is adjusted by the speed control.

Fig. 15 is a schematic diagram of the relationship between the static pressure and the air volume and the relationship between the input power and the air volume in a case where the air volume is excessively large.

Fig. 16 is a schematic configuration diagram of a blower system after replacement of a motor according to a second embodiment.

Fig. 17 is an example of a table T1a stored in a storage according to the second embodiment.

Fig. 18 is an example of a table T2a stored in the storage according to the second embodiment.

Fig. 19 is a schematic diagram for describing duct resistance.
Fig. 20 is a schematic diagram for describing a method of estimating a discharge air volume.

Description of Embodiments

Hereinafter, each embodiment will be described with reference to the drawings. However, unnecessarily detailed description may be omitted. For example, detailed description of a well-known matter and repetitive description of substantially the same configuration may be omitted. This is to avoid unnecessary redundancy in the following description and to facilitate understanding for those skilled in the art.

In addition to the above objects, there is a problem that an installation space of an inverter is also required. On the other hand, in each embodiment, a motor (also referred to as an inverter-integrated motor and an inverter built-in motor) integrated with an inverter is used as an example of a synchronous motor. This makes it possible to overcome the problem of the installation space of the inverter.

In addition to the above objects, when a PM motor, which is a type of synchronous motor, is applied to a motor, a motor adapted to a rated frequency of a pump to be applied is normally used, so that there is a problem that motors for a 50 Hz region and a 60 Hz region are required. On the other hand, in each embodiment, since the synchronous motor has a motor characteristic that is usable in both the 50 Hz region and the 60 Hz region, the same motor can be applied regardless of a power source situation.

In each embodiment, description will be made on the assumption that a pump before replacement is an induction motor. In addition, in the present embodiment, description will be made on the assumption that a motor after the replacement is a synchronous motor, and a PM motor is used as an example. That is, description will be made on the assumption that an inverter-integrated PM motor that is a type of inverter-integrated motor is used as an example of the motor after the replacement.

<First Embodiment>

In a first embodiment, a pump model code will be described as an example of model identification information, but the model identification information is not limited thereto, and may be a product name, a model, or a structure (vertical shaft, horizontal shaft, centrifugal, mixed flow, axial flow, multistage blade, single stage blade), and may be information from which the model of the pump can be identified.

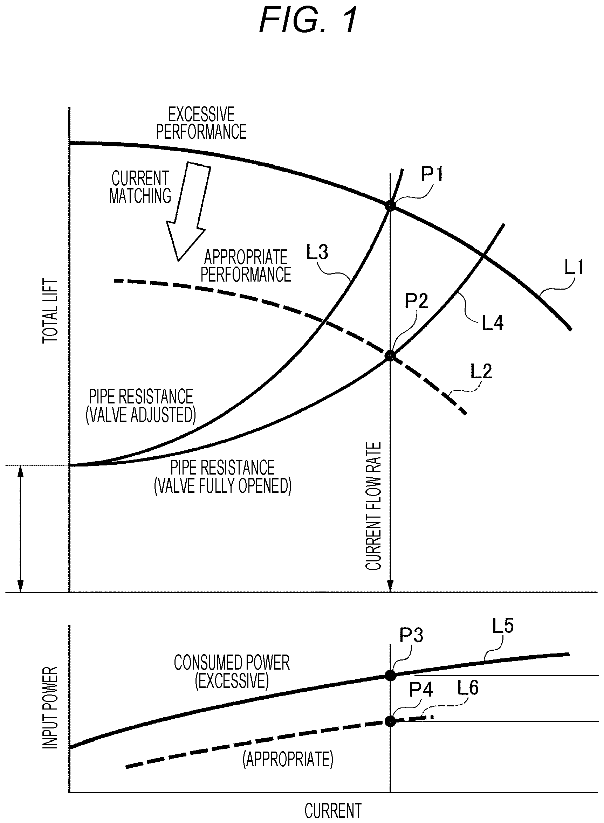

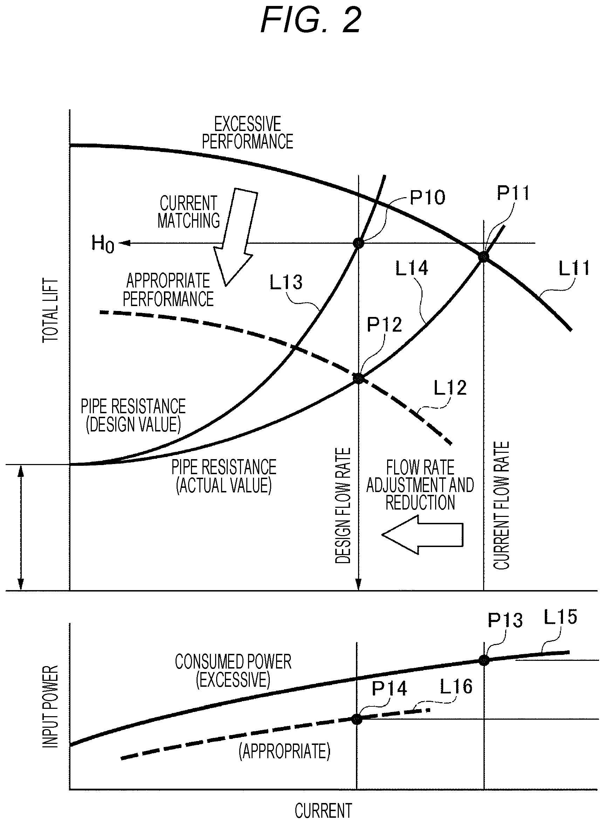

An object according to the first embodiment will be described with reference to Figs. 1 and 2. Fig. 1 is a schematic diagram of a relationship between a total lift and a flow rate and a relationship between input power and the flow rate in a case where the flow rate is adjusted by a valve and in a case where the flow rate is adjusted by speed control. Fig. 1 illustrates a curve L1 indicating the relationship between the total lift and the flow rate in a case where the motor has excessive performance, and a curve L2 indicating the relationship between the total lift and the flow rate in a case where the motor has appropriate performance. In addition, a pipe resistance curve L3 in a case where a valve on a discharge side of a pump is adjusted is illustrated, and an intersection P1 between the pipe resistance curve L3 and the curve L1 is an operation point in a case where the valve on the discharge side of the pump is adjusted due to excessive performance of the motor. In addition, a pipe resistance curve L4 in a case where the valve on the discharge side of the pump is fully opened is illustrated, and an intersection P2 between the pipe resistance curve L4 and the curve L2 is an operation point in a case where the valve on the discharge side of the pump is fully opened with appropriate performance of the motor.

In addition, Fig. 1 illustrates a curve L5 indicating the relationship between the input power and the flow rate in a case where the motor has excessive performance, and illustrates an input power point P3 at the current flow rate at the intersection P1. In addition, a curve L6 indicating the relationship between the input power and the flow rate in a case where the motor has appropriate performance is illustrated, and an input power point P4 at the current flow rate at the intersection P2 is illustrated. As described above, regarding power consumption, since the power consumption in a case where the flow rate is adjusted by speed control is smaller than the power consumption in a case where the flow rate is adjusted by the valve, the energy saving effect can be obtained by obtaining the required flow rate by the speed control.

Fig. 2 is a schematic diagram of the relationship between the total lift and the flow rate and the relationship between the input power and the flow rate in a case where the flow rate is excessively large. Fig. 2 illustrates a pipe resistance curve L13 of a design value, and illustrates an operation point P10 at which a design flow rate and a design total lift Ho are satisfied as design requirements. Fig. 2 illustrates a curve L11 indicating the relationship between the total lift and the flow rate in a case where the motor has excessive performance, and a curve L12 indicating the relationship between the total lift and the flow rate in a case where the motor has appropriate performance. In addition, a pipe resistance curve L14 of an actual value is illustrated, and an operation point P11 in a case where the flow rate is not appropriate and excessively flows is an intersection between the pipe resistance curve L14 and the curve L11. An operation point P12 in a case where the flow rate is adjusted by the speed control with respect to the operation point P11 is an intersection between the pipe resistance curve L14 and the curve L12.

In addition, Fig. 2 illustrates a curve L15 indicating the relationship between the input power and the flow rate in a case where the motor has excessive performance, and illustrates an input power point P13 at the current flow rate at the operation point P11. In addition, a curve L16 indicating the relationship between the input power and the flow rate in a case where the motor has appropriate performance is illustrated, and an input power point P14 at the current flow rate at the operation point P12 is illustrated. As described above, regarding power consumption, since the power consumption in a case where the flow rate is adjusted by speed control is smaller than the power consumption in a case where the flow rate is adjusted by the valve, the energy saving effect can be obtained by obtaining the required flow rate by the speed control.

In the first embodiment, a target fluid machine including a rotor blade is a pump as an example, and a pump system will be described as an example of a fluid machine system that determines an operation frequency of an inverter connected to the target fluid machine including the rotor blade.

A pump system S according to the present embodiment has a function of automatically setting the operation frequency for an operation at the same operation point after replacement from an induction motor to an inverter-integrated motor (for example, an inverter-integrated PM motor) in a case where model identification information (for example, a pump model code) of a target pump and a set of discharge pressure, suction pressure, and a cage height (or discharge flow rate) are acquired. Therefore, it is possible to reduce the time and effort required for an operator at the time of replacing the pump to adjust the operation while changing the operation frequency, and it is possible to easily perform the operation at the operation point where the energy saving effect is improved.

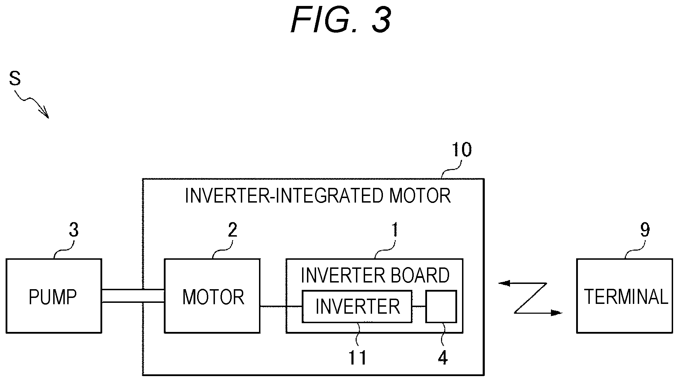

Fig. 3 is a schematic configuration diagram of the pump system after the replacement of the motor according to the first embodiment. As illustrated in Fig. 3, the pump system S according to the present embodiment includes, as an example, a pump 3 and an inverter-integrated motor 10 that drives the pump. The inverter-integrated motor 10 includes, for example, an inverter board 1 and a motor 2. The inverter board 1 is mounted on, for example, a heat sink (not illustrated) integrally formed with a motor frame (not illustrated), and is molded with, for example, resin or the like. The inverter board 1 is provided with an inverter 11 and an information processing device 4. The motor 2 is a synchronous motor, and is, for example, a PM motor.

A setting device (for example, an operation panel) or a communication device for transmitting a model code of the target pump and a set of discharge pressure, suction pressure, and a cage height (or discharge flow rate of the target pump) to the inverter-integrated motor 10 can be connected. Here, a terminal 9 as an example of the communication device is communicably connected to the inverter-integrated motor 10, and here, as an example, the communication is wireless communication. The terminal 9 is, for example, a portable terminal such as a portable phone, a tablet terminal, or a notebook computer. The pump system S may or may not include the terminal 9.

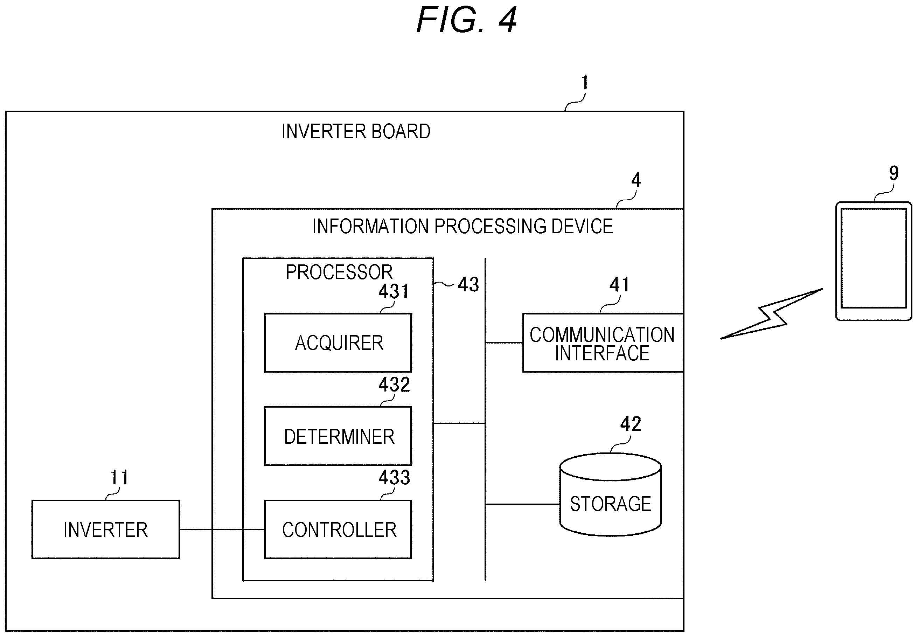

Fig. 4 is a schematic configuration diagram of the information processing device according to the first embodiment. As illustrated in Fig. 4, the information processing device 4 includes a communication interface 41, a storage 42, and a processor 43, and the units are connected by a bus.

The communication interface 41 can communicate with the terminal 9, and here, can perform wireless communication as an example.

The storage 42 stores a program to be read and executed by the processor 43.

The processor 43 functions as an acquirer 431, a determiner 432, and a controller 433 by reading and executing the program from the storage 42. The processing of each unit will be described later.

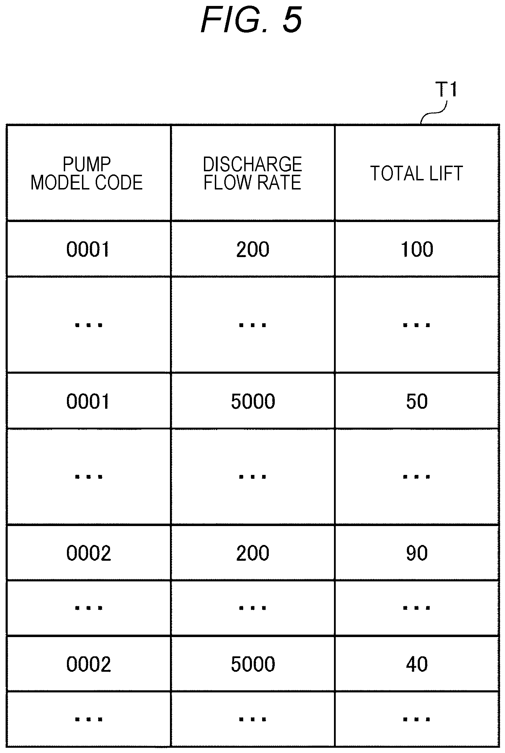

Fig. 5 is an example of a table T1 stored in the storage. As illustrated in Fig. 5, in the table T1 stored in the storage 42, records of a pump model code which is an example of model identification information, and a set of a discharge flow rate and a total lift in a case where an induction motor operates the pump are accumulated. As described above, the storage 42 stores the model identification information (for example, the pump model code) for identifying the model of the pump, and characteristic data of the total lift and the discharge flow rate in a case where the induction motor operates the pump, in association with each other.

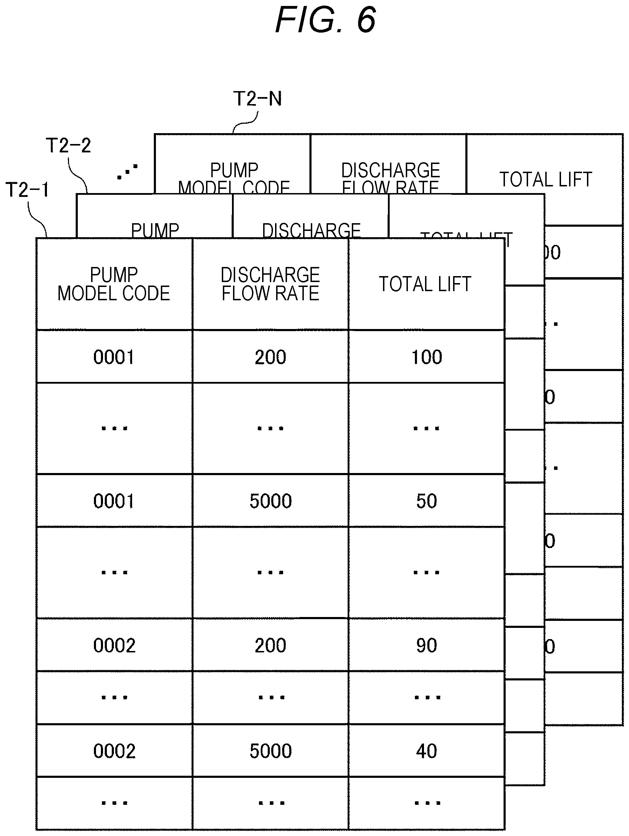

Fig. 6 is an example of a table T2 for each operation frequency, which is stored in the storage. As illustrated in Fig. 6, in a table T2-1, records of the pump model code and a set of a discharge flow rate and a total lift in a case where a synchronous motor operates the pump are accumulated for an operation frequency F1. Similarly, in a table T2-2, records of the pump model code and the set of the discharge flow rate and the total lift in a case where the synchronous motor operates the pump are accumulated for an operation frequency F2. Similarly, in a table T2-N (N is a natural number), records of the pump model code and the set of the discharge flow rate and the total lift in a case where the synchronous motor operates the pump are accumulated for an operation frequency FN.

As described above, the storage 42 stores the model identification information for identifying the model of the pump and the characteristic data of the total lift and the discharge flow rate in a case where the synchronous motor operates the pump, for each operation frequency.

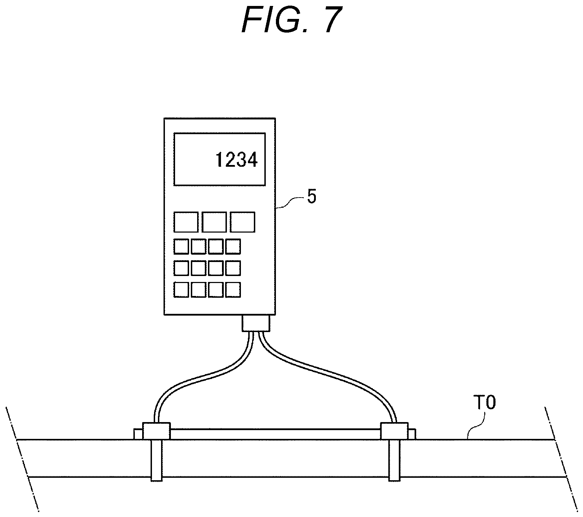

An example of flow rate measurement will be described with reference to Fig. 7. Fig. 7 is a schematic diagram for describing the flow rate measurement. Fig. 7 illustrates a discharge pipe T0 connected to the pump 3, and a discharge flow rate is measured by an ultrasonic flowmeter 5. Then, a record corresponding to a set of the pump model code of the target pump, the measured discharge flow rate, and the total lift of the target pump is searched from the tables T2-1 to T2-N in Fig. 6, and the operation frequency corresponding to the table T2-i (i is an integer from 1 to N) in which there is the record corresponding to the search result is the operation frequency of the inverter 11.

Processing of each unit up to the determination of the operation frequency of the inverter 11 described above will be described. The acquirer 431 acquires the discharge flow rate of the target pump in addition to the model identification information of the target pump. As an example of this acquisition method, the acquirer 431 may acquire the discharge flow rate that has been input to the terminal 9 by a user, transmitted from the terminal 9, and received by the communication interface 41. Alternatively, an analog input module may be provided on the inverter board, and information of the discharge flow rate may be input as an analog signal to acquire the information (not illustrated).

In a case where the discharge flow rate of the target pump is acquired, the determiner 432 may specify the total lift corresponding to the discharge flow rate with reference to the characteristic data corresponding to the model identification information of the target pump in the storage 42, and determine the operation frequency by performing collation with the characteristic data of the total lift and the discharge flow rate for each operation frequency in a case where the synchronous motor operates the pump, such that the discharge flow rate and the lift are obtained.

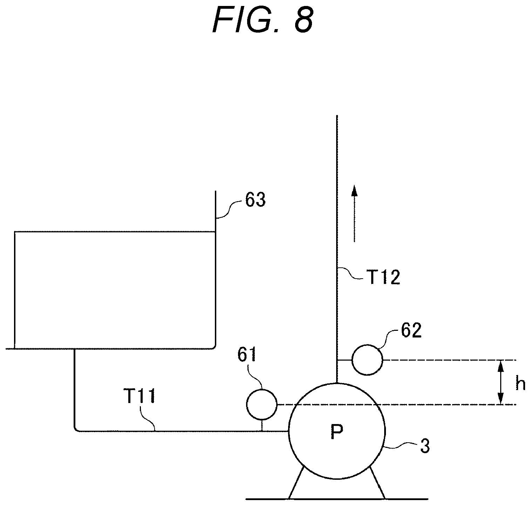

Subsequently, a method of estimating the discharge flow rate from the discharge pressure, the suction pressure, and the gauge height will be described with reference to Fig. 8. Fig. 8 is a schematic diagram for describing the method of estimating the discharge flow rate. Fig. 8 illustrates a water tub 63, a suction pipe T11 in which one end is connected to the water tub 63 and the other end is connected to the pump 3, and a discharge pipe T12 having one end connected to the pump 3. A pressure sensor 61 is provided in the suction pipe T11, and a pressure sensor 62 is provided in the discharge pipe T12. The gauge height h, which is a value obtained by subtracting the height of the pressure sensor 61 from the height of the pressure sensor 62, is illustrated. When the suction pressure is set as Ps, the discharge pressure is set as Pd, the total lift is set as H, a velocity water head is set as Hv, and the specific gravity amount of a liquid is set as $\gamma$, the total lift H is calculated by the following expression.

[Math. 1]

$$H = \frac{(Pd - Ps)}{\gamma} \times 101.9 + h + Hv$$

Here, since the velocity water head Hv can be omitted, the total lift H is obtained from the discharge pressure, the suction pressure, and the gauge height. In the table T1 of Fig. 5, the discharge flow rate corresponding to the set of the pump model code of the target pump and the calculated total lift H is the discharge flow rate of the target pump. Then, a record corresponding to a set of the pump model code of the target pump, the calculated discharge flow rate, and the total lift of the target pump is searched from the tables T2-1 to T2-N in Fig. 6, and the operation frequency corresponding to the table T2-i (i is an integer from 1 to N) in which there is the record corresponding to the search result is the operation frequency of the inverter 11.

Processing of each unit up to the determination of the operation frequency of the inverter 11 described above will be described. The acquirer 431 may acquire a set of the discharge pressure, the suction pressure, and the cage height in addition to the model identification information of the target pump. As an example of this acquisition method, the acquirer 431 may acquire the set of the discharge pressure, the suction pressure, and the cage height, which has been input to the terminal 9 by the user, transmitted from the terminal 9, and received by the communication interface 41. Alternatively, an analog input module may be provided on the inverter board, and information of the set of the discharge pressure, the suction pressure, and the cage height may be input as an analog signal to acquire the information (not illustrated).

In a case where the set of the discharge pressure, the suction pressure, and the cage height is acquired, the determiner 432 may determine the total lift by using the discharge pressure, the suction pressure, and the cage height, specify the discharge flow rate corresponding to the total lift in the characteristic data of the total lift and the discharge flow rate in a case where the induction motor operates the pump, and determine the operation frequency of the inverter by performing collation with the characteristic data of the total lift and the discharge flow rate for each operation frequency in a case where the synchronous motor operates the pump, such that the discharge flow rate and the lift are obtained.

The controller 433 controls the inverter so that an output frequency of the inverter becomes the determined operation frequency. As a result, in a case where the model identification information (for example, the pump model code) of the target pump and the set of the discharge pressure, the suction pressure, and the cage height (or the discharge flow rate) are acquired, the operation frequency for an operation at the same operation point is automatically operated, after replacement from an induction motor to an inverter-integrated motor (for example, an inverter-integrated PM motor).

<Motor Characteristics>

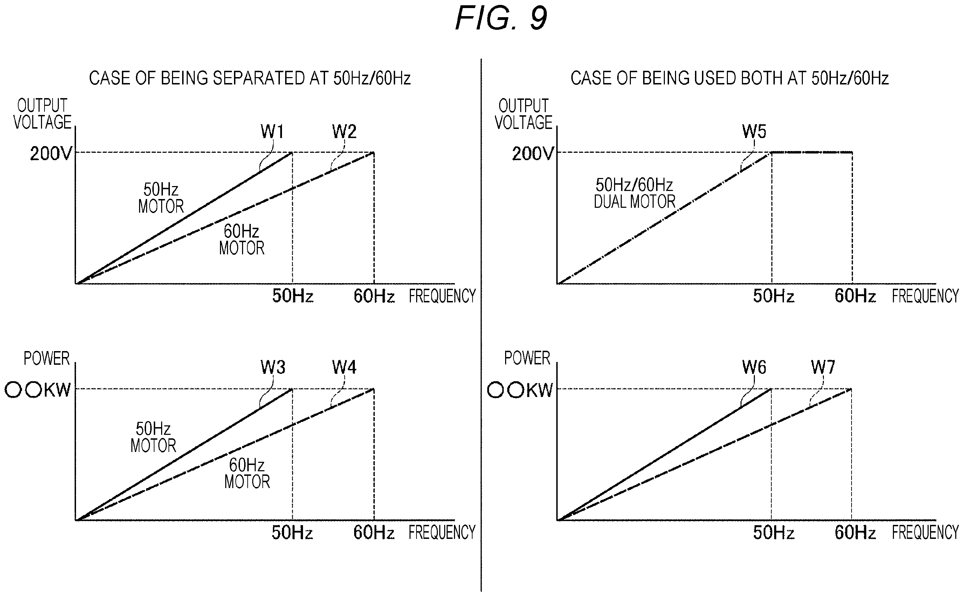

Subsequently, an example of motor characteristics according to the present embodiment will be described. Fig. 9 is a comparison of an example of characteristics between a case where motors are separated at 50/60 Hz and a case where the motors are set both at 50/60 Hz. As illustrated in Fig. 9, a line W1 indicating a relationship between an output voltage and a frequency of a 50 Hz motor and a line W2 indicating a relationship between an output voltage and the frequency of a 60 Hz motor in a case where the motors are separated at 50/60 Hz are illustrated. In addition, a line W3 indicating a relationship between the power consumption and the frequency of the 50 Hz motor and a line W4 indicating a relationship between the power and the frequency of the 60 Hz motor in the case where the motors are separated at 50/60 Hz are illustrated.

On the other hand, a line W5 indicating the relationship between the output voltage and the frequency of a 50/60 Hz dual motor in a case where the motor is used both at 50/60 Hz is illustrated. In addition, in a case where the motor is used both at 50/60 Hz, a line W6 indicating the relationship between the power consumption and the frequency in a case where the motor is applied to a 50 Hz pump, and a line W7 indicating the relationship between the power consumption and the frequency in a case where the motor is applied to a 60 Hz pump are illustrated.

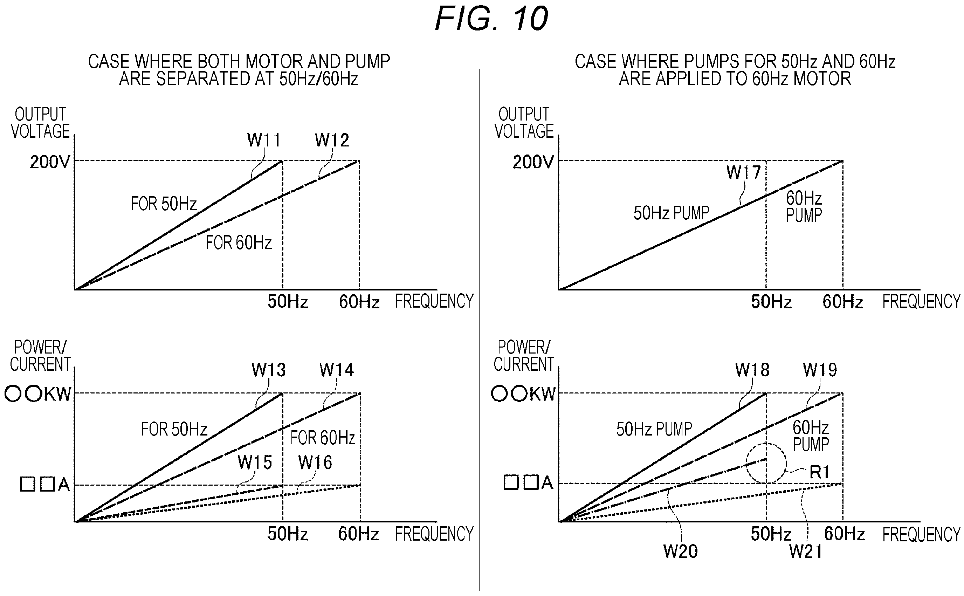

In Fig. 9, the frequency is set to 50/60 Hz, but the value of this frequency varies depending on the number of poles of the motor. For example, the frequency is 100/120 Hz in a case where the number of poles of the motor is four, and the frequency is 150/180 Hz when the number of poles of the motor is six. The same applies to Figs. 10, 11, and 12. As described above, in the synchronous motor, for example, a setting frequency that reaches the rated output voltage is between $50 \times$ (number of poles/2) and $60 \times$ (number of poles/2) Hz.

Fig. 10 is a comparison of an example of the characteristics between a case where both a motor and a pump are set separately at 50 Hz and 60 Hz and a case where pumps for 50 Hz and 60 Hz are applied to a motor for 60 Hz. As illustrated in Fig. 10, a line W11 indicating the relationship between the output voltage for 50 Hz and the frequency and a line W12 indicating the relationship between the output voltage for 60 Hz and the frequency are illustrated in a case where both the motor and the pump are set separately at 50 Hz and 60 Hz. In addition, a line W13 indicating a relationship between the power and the frequency of the 50 Hz motor and a line W14 indicating a relationship between the power and the frequency of the 60 Hz motor in the case where both the motor and the pump are separated at 50/60 Hz are illustrated. Furthermore, a line W15 indicating a relationship between a current and the frequency of the 50 Hz motor and a line W16 indicating a relationship between the current and the frequency of the 60 Hz motor in the case where both the motor and the pump are separated at 50/60 Hz are illustrated.

On the other hand, a line W17 indicating the relationship between the output voltage and the frequency in a case where pumps for 50 Hz and 60 Hz are applied to the 60 Hz motor is illustrated. In addition, a line W18 indicating the relationship between the power consumption and the frequency of the motor in a case where application to the 50 Hz pump is performed in a case where the pumps for 50 Hz and 60 Hz are applied to the 60 Hz motor, and a line W19 indicating the relationship between the power and the frequency of the motor in a case where application to the 60 Hz pump is performed are illustrated. In addition, a line W20 indicating the relationship between the current and the frequency of the motor in a case where application to the 50 Hz pump is performed in a case where the pumps for 50 Hz and 60 Hz are applied to the 60 Hz motor, and a line W21 indicating the relationship between the current and the frequency of the motor in a case where application to the 60 Hz pump is performed are illustrated. Here, focusing on a region R1 of the line W20, the current increases as compared with the line W15. When the pumps for 50 Hz and 60 Hz are simply driven by the motor for 60 Hz as described above, the current of the motor increases in the case of application to the 50 Hz pump.

On the other hand, in contrast to Fig. 10, a case where the pumps for 50 Hz and 60 Hz are applied to the 50 Hz motor will be described. In a case where the motor 2 is, for example, a PM motor, since a rotor of the PM motor is a magnet, a voltage (referred to as an induced voltage below) is generated when the rotor rotates. For example, in the case of a motor for 50 Hz and rated at 200 V, the induced voltage is 200 V when rotated at 50 Hz. When the operation frequency is increased from 50 Hz, the induced voltage increases in proportion to the rotation speed. Since the output voltage of the inverter depends on the input voltage, in a case where the input voltage is 200 V, the output voltage is limited to 200 V, and thus it is not possible to drive the motor 2 as it is. As described above, when there is an intention to drive the 60 Hz pump by the 50 Hz motor, simply driving is not possible.

Therefore, in the present embodiment, as an example, in a case where the operation frequency exceeds the setting frequency (for example, 50 Hz), the controller 433 controls a current that weakens the magnetic flux of the magnet to flow in the inverter 11 such that the induced voltage of the motor 2 becomes equal to or less than the rated output voltage (for example, 200 V). This control is referred to as weak field control. As a result, the 50 Hz motor can drive the 60 Hz pump.

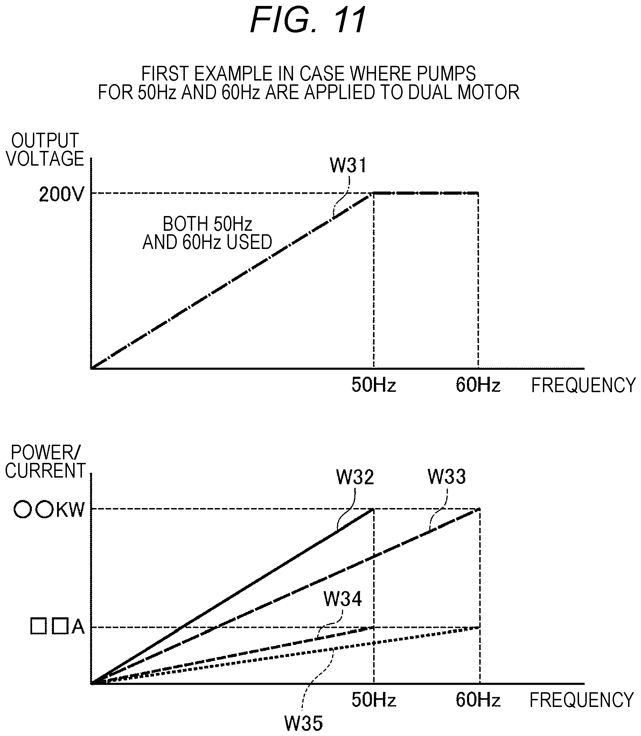

Subsequently, a first example in which application to pumps for 50 Hz and 60 Hz is performed for the 50 Hz/60 Hz dual motor will be described with reference to Fig. 11. Fig. 11 is an example of characteristics of the first example in which the application to the pumps for 50 Hz and 60 Hz is performed for the 50 Hz/60 Hz dual motor.

Fig. 11 illustrates a line W31 indicating the relationship between the output voltage and the frequency of the 50 Hz/60 Hz dual motor. As indicated by the line W31, as an example, the output voltage linearly increases as the frequency increases from 0 Hz to 50 Hz, and the output voltage is constant even when the frequency increases from 50 Hz to 60 Hz. In this case, the 50 Hz pump is controlled as usual, and the controller 433 performs weak field control on the 60 Hz pump. That is, the controller 433 controls a current that weakens the magnetic flux of the magnet to flow in the inverter such that the induced voltage of the motor 2 becomes 200 V that is the rated output voltage.

Furthermore, Fig. 11 illustrates a line W32 indicating the relationship between the power consumption and the frequency of the motor in a case where application to the 50 Hz pump is performed, and a line W33 indicating the relationship between the power consumption and the frequency of the motor in a case where application to the 60 Hz pump is performed. Furthermore, Fig. 11 illustrates a line W34 indicating the relationship between the current and the frequency of the motor in a case where application to the 50 Hz pump is performed, and a line W35 indicating the relationship between the current and the frequency of the motor in a case where application to the 60 Hz pump is performed.

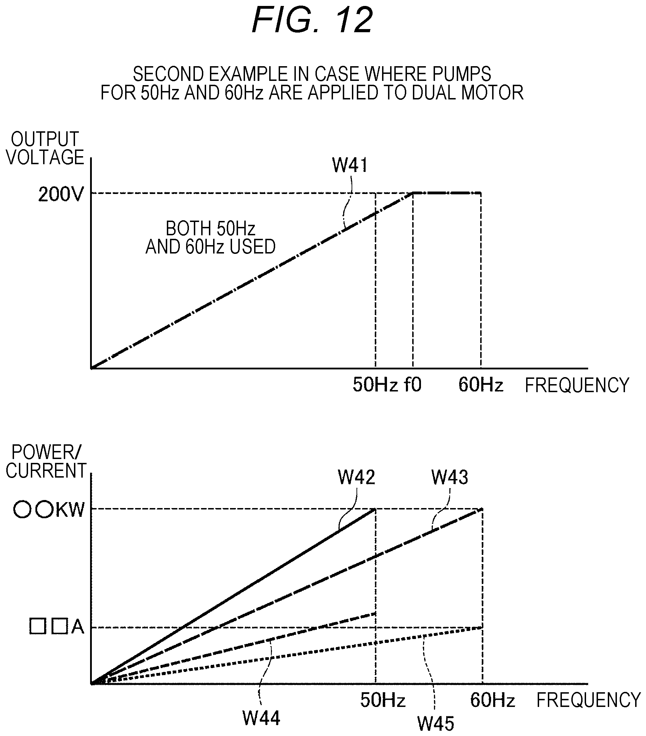

Subsequently, a second example in which application to pumps for 50 Hz and 60 Hz is performed for the 50 Hz/60 Hz dual motor will be described with reference to Fig. 12. Fig. 12 is an example of characteristics of the second example in which the application to the pumps for 50 Hz and 60 Hz is performed for the 50 Hz/60 Hz dual motor.

Fig. 12 illustrates a line W41 indicating the relationship between the output voltage and the frequency of the 50 Hz/60 Hz dual motor. As indicated by the line W41, as an example, the output voltage linearly increases as the frequency increases from 0 Hz to f0 (where f0 is a frequency between 50 to 60 Hz), and the output voltage is constant even when the frequency increases from f0 Hz to 60 Hz. In this case, the 50 Hz pump is controlled as usual, and the controller 433 performs weak field control on the 60 Hz pump. That is, the controller 433 controls a current that weakens the magnetic flux of the magnet to flow in the inverter such that the induced voltage of the motor 2 becomes 200 V that is the rated output voltage.

Furthermore, Fig. 12 illustrates a line W42 indicating the relationship between the power consumption and the frequency of the motor in a case where application to the 50 Hz pump is performed, and a line W43 indicating the relationship between the power consumption and the frequency of the motor in a case where application to the 60 Hz pump is performed. Furthermore, Fig. 12 illustrates a line W44 indicating the relationship between the current and the frequency of the motor in a case where application to the 50 Hz pump is performed, and a line W45 indicating the relationship between the current and the frequency of the motor in a case where application to the 60 Hz pump is performed. In the second example of Fig. 12, the current of the motor at 50 Hz increases as compared with the first example of Fig. 11. In the second example of Fig. 12, the current value increases as compared with the first example of Fig. 11, but such a case is also included in the present embodiment because there is a case where such characteristics are more efficient.

<Regarding Weak Field Control>

Here, the weak field control will be described. Motor control methods used generally in the related art include V/F control in which a voltage corresponding to a command frequency is output to keep a motor magnetic flux constant, and vector control in which an output current of an inverter is decomposed into an excitation current and a torque current to control an excitation voltage and a torque voltage such that a motor current suitable for a load can flow.

The V/F control does not require high-speed calculation, and the motor can be controlled with a simple configuration. However, in this V/F control, feedback information is poor, and thus it is not possible to expect highly efficient control according to the characteristics of individual motors. In addition, since the position of the motor rotor is not detected, a motor rotor may step out in the case of a synchronous machine.

On the other hand, there is sensorless vector control as a control method capable of preventing step-out of a synchronous machine and controlling the synchronous machine without using an expensive position sensor. This sensorless vector control is a control method of estimating the position of the rotor from the motor current that has been fed back, without using a position sensor. In this control method, the optimum control suitable for the state of a load is performed based on a motor model. Thus, it is possible to exhibit the efficiency of the motor to the maximum.

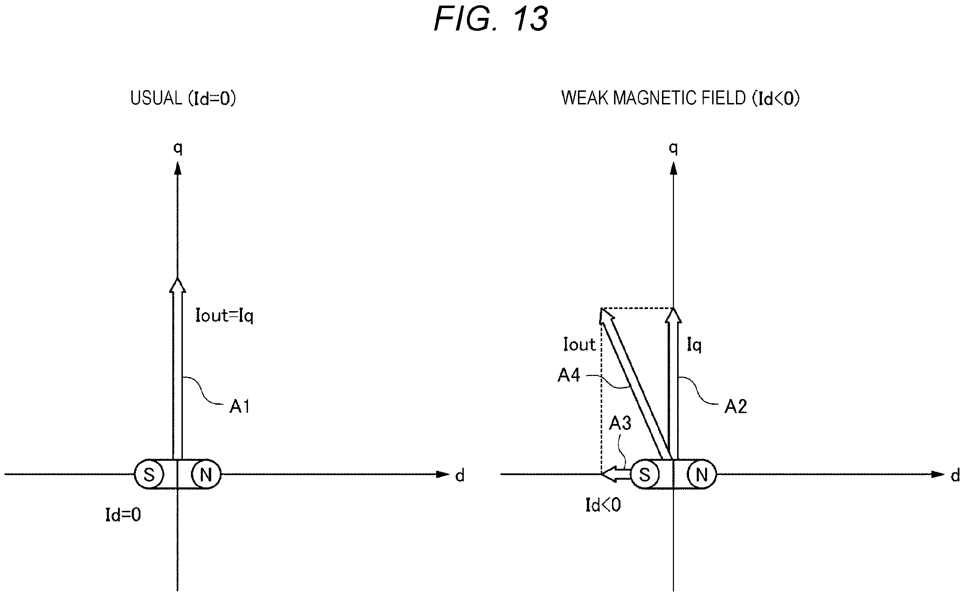

Fig. 13 is a schematic diagram for describing the weak field control. Fig. 13 illustrates the relationship among an excitation current Id, a torque current Iq, and an inverter output current Iout in the normal case (excitation current Id = 0) and in the case of the weak field control (excitation current Id < 0).

When the vector control is performed, so-called Id = 0 control in which no excitation current (d-axis current) Id is caused to flow is generally used as the control method. However, although the Id = 0 control has good controllability, the control may become difficult because the terminal voltage of the motor increases during a high-speed operation. In such a case, the weak field control in which control is performed to reduce the field magnetic flux with an increase in speed is used. Specifically, as illustrated in Fig. 13, by causing a current satisfying Id < 0 to flow so that the magnetic flux of the magnet is weakened, it is possible to suppress an increase in the terminal voltage of the motor. As a result, it is possible to operate at a high speed.

As described above, the information processing device 4 according to the present embodiment can refer to the storage 42 that stores the model identification information for identifying the model of the pump, and the characteristic data of the total lift and the discharge flow rate in a case where an induction motor operates the pump, in association with each other, and stores the model identification information for identifying the model of the pump, and the characteristic data of the total lift and the discharge flow rate in a case where a synchronous motor operates the pump, for each operation frequency. The information processing device 4 includes the acquirer 431 and the determiner 432.

The acquirer 431 acquires the discharge flow rate of a target pump in addition to the model identification information of the target pump, or acquires a set of the discharge pressure, the suction pressure, and the cage height in addition to the model identification information of the target pump.

According to an aspect, in a case where the discharge flow rate of the target pump is acquired, the determiner 432 specifies the total lift corresponding to the discharge flow rate with reference to the characteristic data corresponding to the model identification information of the target pump in the storage 42, and determines the operation frequency by performing collation with the characteristic data of the total lift and the discharge flow rate for each operation frequency in the storage 42 in a case where the synchronous motor operates the pump, such that the discharge flow rate and the lift are obtained.

Alternatively, according to another aspect, in a case where the set of the discharge pressure, the suction pressure, and the cage height is acquired, the determiner 432 determines the total lift by using the discharge pressure, the suction pressure, and the cage height, specifies the discharge flow rate corresponding to the total lift with reference to the characteristic data of the total lift and the discharge flow rate in the storage 42 in a case where the induction motor operates the pump, and determines the operation frequency of the inverter by performing collation with the characteristic data of the total lift and the discharge flow rate for each operation frequency in the storage 42 in a case where the synchronous motor operates the pump, such that the discharge flow rate and the lift are obtained.

According to this configuration, in a case where the model identification information (for example, the pump model code) of the target pump and the set of the discharge pressure, the suction pressure, and the cage height (or the discharge flow rate) are acquired, it is possible to automatically set the operation frequency for the operation at the same operation point after replacement from an induction motor to an inverter-integrated motor (for example, an inverter-integrated PM motor). Therefore, it is possible to reduce the time and effort required for an operator at the time of replacing the pump to adjust the operation while changing the operation frequency, and it is possible to easily perform the operation at the operation point where the energy saving effect is improved.

Note that the controller 433 has been described as being built in the information processing device 4, but the present embodiment is not limited thereto. The controller 433 may be provided outside the information processing device 4 as a control device.

A pump device has been described in the first embodiment, but the present embodiment is not limited thereto. The present embodiment can also be applied to a blower or the like having similar operation characteristics.

<Second Embodiment>

In a second embodiment, the target fluid machine including the rotor blade is a blower as an example, and a blower system will be described as an example of the fluid machine system that determines the operation frequency of the inverter connected to the target fluid machine including the rotor blade.

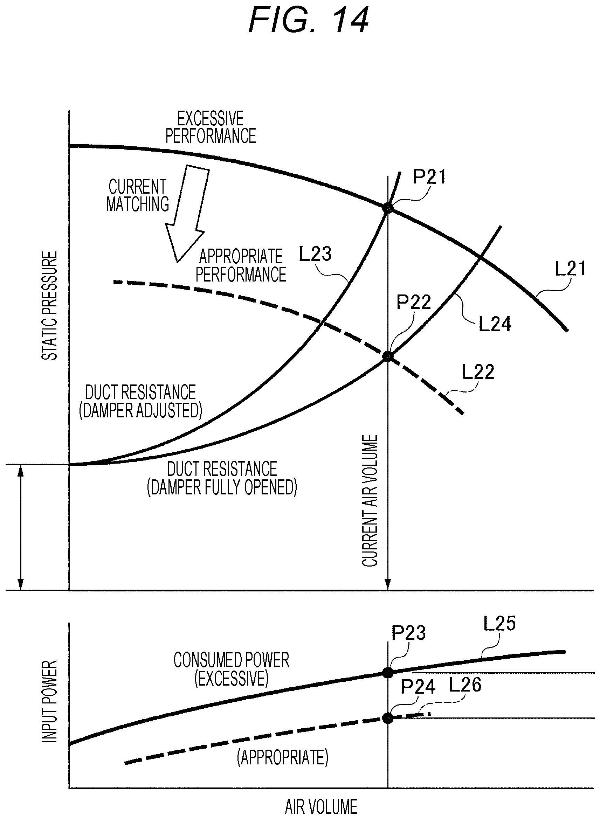

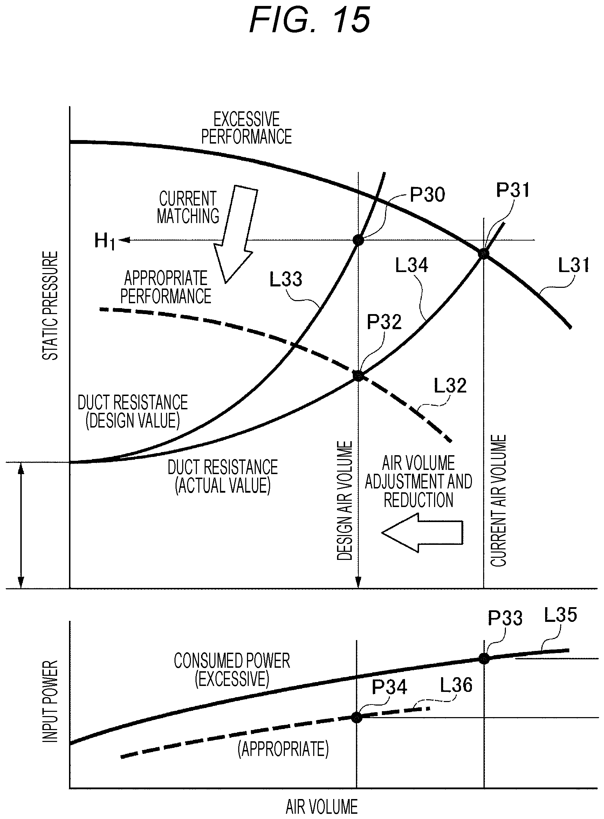

Figs. 14 and 15 are schematic diagrams of an example in a case where application to a blower is performed. Figs. 14 and 15 are obtained by replacing "the total lift with static pressure", "the flow rate with an air volume", "the pipe with a duct", and "the valve with a damper" described in Figs. 1 and 2. Here, the static pressure of a blower is obtained by subtracting dynamic pressure at a blower discharge port from the total pressure of the blower.

Fig. 14 is a schematic diagram of a relationship between the static pressure and the air volume and a relationship between input power and the air volume, in a case where the air volume is adjusted by a damper and in a case where the air volume is adjusted by speed control. Fig. 14 illustrates a curve L21 indicating the relationship between the static pressure and the air volume in a case where the motor has excessive performance, and a curve L22 indicating the relationship between the static pressure and the air volume in a case where the motor has appropriate performance. In addition, a duct resistance curve L23 in a case where the damper on the discharge side of the blower is adjusted is illustrated, and an intersection P21 between the duct resistance curve L23 and the curve L21 is an operation point in a case where the damper on the discharge side of the blower is adjusted due to the excessive performance of the motor. In addition, a duct resistance curve L24 in a case where the damper on the discharge side of the blower is fully opened is illustrated, and an intersection P22 between the duct resistance curve L24 and the curve L22 is an operation point in a case where the valve on the discharge side of the pump is fully opened with appropriate performance of the motor.

In addition, Fig. 14 illustrates a curve L25 indicating the relationship between the input power and the air volume flow rate in a case where the motor has excessive performance, and illustrates an input power point P23 at the current air volume flow rate at the intersection P21. In addition, a curve L26 indicating the relationship between the input power and the air volume in a case where the motor has appropriate performance is illustrated, and an input power point P24 at the current air volume at the intersection P22 is illustrated. As described above, regarding power consumption, since the power consumption in a case where the air volume is adjusted by the speed control is smaller than the power consumption in a case where the air volume is adjusted by the damper, the energy saving effect can be obtained by obtaining the required air volume by the speed control, similarly to the pump device.

Fig. 15 is a schematic diagram of the relationship between the static pressure and the air volume and the relationship between the input power and the air volume in a case where the air volume is excessively large. Fig. 15 illustrates a duct resistance curve L33 of a design value, and illustrates an operation point P30 at which a design flow rate and design static pressure $H_1$ are satisfied as design requirements. Fig. 15 illustrates a curve L31 indicating the relationship between the static pressure and the air volume in a case where the motor has excessive performance, and a curve L32 indicating the relationship between the static pressure and the air volume in a case where the motor has appropriate performance. In addition, a duct resistance curve L34 of an actual value is illustrated, and an operation point P31 in a case where the air volume is not appropriate and excessively flows is an intersection between the duct resistance curve L34 and the curve L31. An operation point P32 in a case where the air volume is adjusted by the speed control with respect to the operation point P31 is an intersection between the duct resistance curve L34 and the curve L32.

In addition, Fig. 15 illustrates a curve L35 indicating the relationship between the input power and the air volume in a case where the motor has excessive performance, and illustrates an input power point P33 at the current air volume at the operation point P31. In addition, a curve L36 indicating the relationship between the input power and the air volume in a case where the motor has appropriate performance is illustrated, and an input power point P14 at the current air volume at the operation point P12 is illustrated. As described above, regarding power consumption, since the power consumption in a case where the flow rate is adjusted by the speed control is smaller than the power consumption in a case where the air volume is adjusted by the damper, the energy saving effect can be obtained by obtaining the required air volume by the speed control, similarly to the pump device.

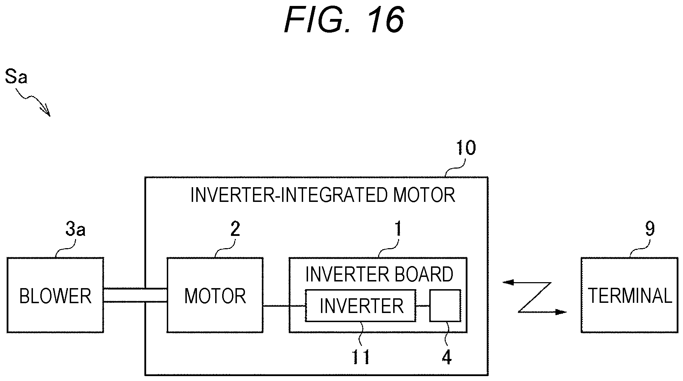

Fig. 16 is a schematic configuration diagram of the blower system after replacement of the motor according to the second embodiment. As illustrated in Fig. 16, a transmitter system Sa according to the second embodiment includes, as an example, a blower 3a and an inverter-integrated motor 10 that drives the blower. The inverter-integrated motor 10 includes, for example, an inverter board 1 and a motor 2. The inverter board 1 is mounted on, for example, a heat sink (not illustrated) integrally formed with a motor frame (not illustrated), and is molded with, for example, resin or the like. The inverter board 1 is provided with an inverter 11 and an information processing device 4. The motor 2 is a synchronous motor, and is, for example, a PM motor. Since the configuration of the information processing device 4 is similar to that of Fig. 4 in the first embodiment, the description thereof will be omitted.

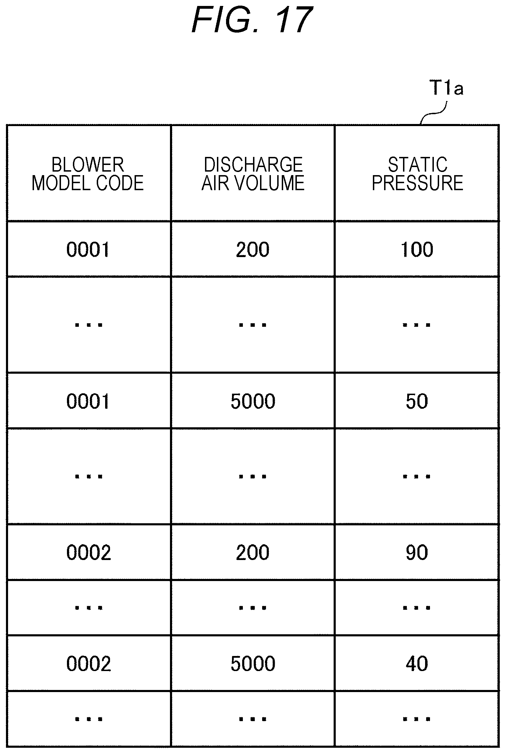

Fig. 17 is an example of a table T1a stored in a storage according to the second embodiment. As illustrated in Fig. 17, in the table T1a stored in a storage 42, records of a blower model code which is an example of model identification information, and a set of a discharge flow rate and static pressure in a case where an induction motor operates the blower are accumulated. As described above, the storage 42 stores the model identification information (for example, the blower model code) for identifying the model of the blower, and characteristic data of the static pressure and the discharge air volume in a case where the induction motor operates the blower, in association with each other.

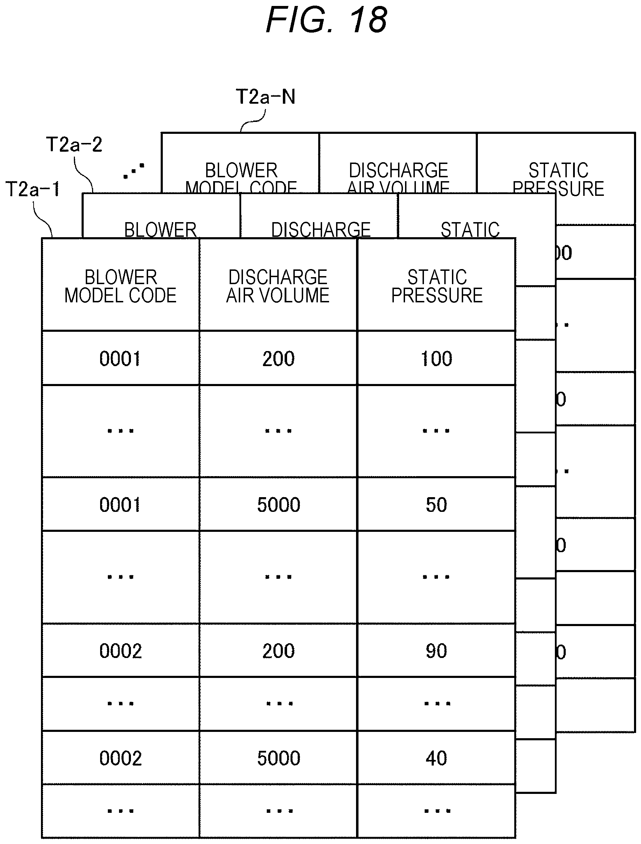

Fig. 18 is an example of a table T2a stored in the storage according to the second embodiment. As illustrated in Fig. 18, in a table T2a-1, records of the transmitter model code and the set of the discharge air volume and the static pressure in a case where a synchronous motor operates the transmitter are accumulated for an operation frequency F1. Similarly, in a table T2a-2, records of the transmitter model code and the set of the discharge air volume and the static pressure in a case where a synchronous motor operates the transmitter are accumulated for an operation frequency F2. In a table T2a-N (N is a natural number), records of the transmitter model code and the set of the discharge air volume and the static pressure in a case where the synchronous motor operates the transmitter are accumulated for an operation frequency FN.

As described above, in a case where application to the transmitter is performed, the storage 42 stores the model identification information (for example, the pump model code) for identifying the model of the transmitter and the characteristic data of the static pressure and the discharge flow rate in a case where the induction motor operates the transmitter for each operation frequency.

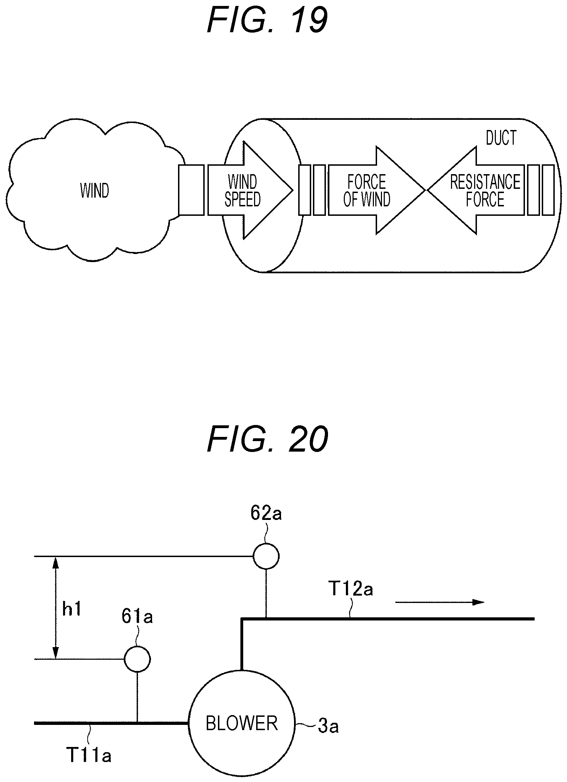

The duct resistance will be described with reference to Fig. 19. Fig. 19 is a schematic diagram for describing the duct resistance. As illustrated in Fig. 19, air resistance is defined by a force of the wind flowing through a pipe and the resistance to the force. Even when air flows into the duct, a resistance force acts against the force of the wind. This resistance force is called duct resistance.

Although not illustrated, a case where Fig. 7 is applied to the transmitter will be described. A discharge pipe T0 connected to the transmitter 3a is illustrated instead of the pump. An air flowmeter is provided instead of the ultrasonic flowmeter 5, and a discharge wind speed is measured by the air flowmeter. Then, a record corresponding to a set of the blower model code of a target transmitter, the measured discharge air volume, and the static pressure of the target blower is searched from the tables T2a-1 to T2a-N in Fig. 18, and the operation frequency corresponding to the table T2a-i (i is an integer from 1 to N) in which there is the record corresponding to the search result is the operation frequency of the inverter 11.

Processing of each unit up to the determination of the operation frequency of the inverter 11 described above will be described. An acquirer 431 acquires the discharge air volume of the target blower in addition to the model identification information of the target blower. As an example of this acquisition method, the acquirer 431 may acquire the discharge air volume that has been input to a terminal 9 by the user, transmitted from the terminal 9, and received by a communication interface 41. Alternatively, an analog input module may be provided on the inverter board, and information of the discharge air volume may be input as an analog signal to acquire the information (not illustrated).

In a case where the discharge air volume of the target blower is acquired, the determiner 432 may specify the static pressure corresponding to the discharge air volume with reference to characteristic data corresponding to the model identification information of the target blower in the storage 42, and determine the operation frequency by performing collation with the characteristic data of the static pressure and the discharge air volume for each operation frequency in a case where the synchronous motor operates the pump, such that the discharge air volume and the static pressure are obtained.

Subsequently, a method of estimating the discharge air volume from the discharge pressure, the suction pressure, and the gauge height will be described with reference to Fig. 20. Fig. 20 is a schematic diagram for describing the method of estimating the discharge air volume. Fig. 20 illustrates a suction duct T11a and a discharge duct T12a having one end connected to the blower 3a. A pressure sensor 61a is provided in the suction duct T11a, and a pressure sensor 62a is provided in the discharge duct T12a. The gauge height h1, which is a value obtained by subtracting the height of the pressure sensor 61a from the height of the pressure sensor 62a, is illustrated.

When suction port total pressure is set as Psa, discharge port total pressure is set as Pda, dynamic pressure on the suction side is set as Psv, and dynamic pressure on the discharge side is set as Pdv, the static pressure Ha of the target blower is obtained by subtracting the static pressure on the suction side from the static pressure on the discharge side and adding the gauge height h1, and thus is calculated by the following expression.

$$Ha = Pda - Pdv - (Psa - Psv) + h1$$

In the table T1a of Fig. 17, the discharge air volume corresponding to the set of the blower model code of the target blower and the calculated static pressure is the discharge air volume of the target pump.

Then, the record corresponding to the set of the blower model code of the target blower, the calculated discharge air volume, and the static pressure of the target blower is searched from the tables T2-1 to T2-N in Fig. 18, and the operation frequency corresponding to the table T2a-i (i is an integer from 1 to N) in which there is the record corresponding to the search result is the operation frequency of the inverter 11.

Processing of each unit up to the determination of the operation frequency of the inverter 11 described above will be described. The acquirer 431 may acquire a set of the discharge pressure, the suction pressure, and the cage height in addition to the model identification information of the target pump. As an example of this acquisition method, the acquirer 431 may acquire the set of the discharge pressure, the suction pressure, and the cage height, which has been input to the terminal 9 by the user, transmitted from the terminal 9, and received by the communication interface 41. Alternatively, an analog input module may be provided on the inverter board, and information of the set of the discharge pressure, the suction pressure, and the cage height may be input as an analog signal to acquire the information (not illustrated).

For example, in a case where the set of the discharge pressure, the suction pressure, and the cage height is acquired, the determiner 432 may determine the static pressure by using the discharge pressure, the suction pressure, and the cage height, specify the discharge flow rate corresponding to the static pressure in the characteristic data of the static pressure and the discharge air volume in a case where the induction motor operates the pump, and determine the operation frequency of the inverter by performing collation with the characteristic data of the static pressure and the discharge air volume for each operation frequency in a case where the synchronous motor operates the blower, such that the discharge air volume and the static pressure are obtained.

In the first embodiment, the motor characteristics and the control method for the 50 Hz pump and the 60 Hz pump have been described. In the second embodiment, the motor characteristics and the control method can be similarly applied to a 50 Hz blower and a 60 Hz blower, and the similar effect can be obtained. Such motor characteristics and control method are also included in the second embodiment.

In addition, although the weak field control has been described in the first embodiment, the same weak field control can be performed in the second embodiment. Such weak field control is also included in the second embodiment.

The blower system Sa according to the second embodiment includes the storage that stores the model identification information for identifying the model of a blower, and the characteristic data of the static pressure and the discharge air volume in a case where the induction motor operates the blower, in association with each other, and stores the model identification information for identifying the model of the blower, and the characteristic data of the static pressure and the discharge air volume in a case where the synchronous motor operates the blower, for each operation frequency.

The blower system Sa further includes the acquirer that acquires the discharge air volume of the target blower in addition to the model identification information of the target blower, or acquires the set of the discharge pressure, the suction pressure, and the cage height in addition to the model identification information of the target blower.

The blower system Sa further includes the determiner. For example, in a case where the discharge air volume of the target blower is acquired, the determiner specifies the static pressure corresponding to the discharge air volume with reference to characteristic data corresponding to the model identification information of the target blower in the storage, and determines the operation frequency by performing collation with the characteristic data of the static pressure and the discharge air volume for each operation frequency with reference to the storage in a case where the synchronous motor operates the pump, such that the discharge air volume and the static pressure are obtained. Alternatively, for example, in a case where the set of the discharge pressure, the suction pressure, and the cage height is acquired, the determiner determines the static pressure by using the discharge pressure, the suction pressure, and the cage height, specifies the discharge air volume corresponding to the static pressure by using the characteristic data of the static pressure and the discharge air volume with reference to the storage in a case where the induction motor operates the blower, and determines the operation frequency of the inverter by performing collation with the characteristic data of the static pressure and the discharge air volume for each operation frequency in the storage in a case where the synchronous motor operates the pump, such that the discharge air volume and the static pressure are obtained.

According to this configuration, in a case where the model identification information (for example, the blower model code) of the target blower and the set of the discharge pressure, the suction pressure, and the cage height (or the discharge air volume) are acquired, it is possible to automatically set the operation frequency for the operation at the same operation point after replacement from an induction motor to an inverter-integrated motor (for example, an inverter-integrated PM motor). Therefore, it is possible to reduce the time and effort required for an operator at the time of replacing the blower to adjust the operation while changing the operation frequency, and it is possible to easily perform the operation at the operation point where the energy saving effect is improved.

As described above, in summary, the present disclosure provides the fluid machine system that determines the operation frequency of the inverter connected to the target fluid machine including the rotor blade. That is, the fluid machine system includes: the storage that stores the model identification information for identifying the model of the fluid machine including the rotor blade and the characteristic data of the total lift and the discharge flow rate in a case where an induction motor operates the fluid machine, in association with each other, and stores the model identification information for identifying the model of the fluid machine including the rotor blade, and the characteristic data of the total lift and the discharge flow rate or the characteristic data of the static pressure and the discharge air volume in a case where a synchronous motor operates the fluid machine for each operation frequency; and the acquirer that acquires the discharge flow rate or the discharge air volume of the target fluid machine in addition to the model identification information of the target fluid machine, or acquires the set of the discharge pressure, the suction pressure, and the cage height in addition to the model identification information of the target fluid machine.

The fluid machine system further includes the determiner that, in a case where the discharge flow rate or the discharge air volume of the target fluid machine is acquired, specifies the total lift or the static pressure corresponding to the discharge flow rate or the discharge air volume with reference to the characteristic data corresponding to the model identification information of the target fluid machine in the storage, and determines the operation frequency of the inverter by performing collation with the characteristic data of the total lift and the discharge flow rate for each operation frequency or the characteristic data of the static pressure and the discharge air volume for each operation frequency in the storage in a case where a synchronous motor operates the fluid machine, such that the discharge flow rate and the lift are obtained or the discharge air volume and the static pressure are obtained, or, in a case where the set of the discharge pressure, the suction pressure, and the cage height is acquired, determines the total lift or the static pressure by using the discharge pressure, the suction pressure, and the cage height, specifies the discharge flow rate corresponding to the total lift or the discharge air volume corresponding to the static pressure by using the characteristic data of the total lift and the discharge flow rate or the characteristic data of the static pressure and the discharge air volume with reference to the storage in a case where an induction motor operates the fluid machine, and determines the operation frequency of the inverter by performing collation with the characteristic data of the total lift and the discharge flow rate for each operation frequency or the characteristic data of the static pressure and the discharge air volume for each operation frequency with reference to the storage in a case where the synchronous motor operates the fluid machine, such that the specified discharge flow rate and the lift are obtained or the specified discharge air volume and the determined static pressure are obtained.

According to this configuration, in a case where model identification information (for example, a pump model code and a blower model code) of a target fluid machine (for example, a pump and a blower) and a set of discharge pressure, suction pressure, and a cage height (or a discharge flow rate or a discharge air volume) are acquired, an operation frequency for operating at the same operation point can be automatically set after the induction motor is replaced with an inverter-integrated motor (for example, an inverter-integrated PM motor). Therefore, it is possible to reduce the time and effort required for an operator at the time of replacing a fluid machine (for example, a pump and a blower) to adjust the operation while changing the operation frequency, and it is possible to easily perform the operation at the operation point where the energy saving effect is improved.

Note that at least a part of the information processing device 4 described in the above-described embodiment may be configured by hardware or software. In the case of being configured by software, a program for realizing at least some functions of the information processing device 4 may be stored in a computer-readable recording medium and read and executed by a computer. The recording medium is not limited to a removable recording medium such as a magnetic disk or an optical disc, and may be a fixed recording medium such as a hard disk device or a memory.

In addition, a program for realizing at least some functions of the information processing device 4 may be distributed via a communication line (including wireless communication) such as the Internet. Further, the program may be distributed via a wired line or a wireless line such as the Internet or stored in a recording medium in an encrypted, modulated, or compressed state.

Furthermore, the information processing device 4 may be caused to function by one or a plurality of information devices. In the case of using a plurality of information devices, one of the information devices may be a computer, and the computer may execute a predetermined program to realize a function as at least one means of the information processing device 4.

In addition, in the invention of the method, all the steps may be realized by automatic control by a computer. In addition, while the computer is caused to execute each step, progress control between the steps may be performed by a human hand. Furthermore, at least some of all steps may be executed by the human hand.

Hitherto, the present invention is not limited to the above-described embodiments as they are, and can be embodied by modifying the components without departing from the gist of the present invention in the implementation stage. In addition, various inventions can be formed by appropriately combining a plurality of components disclosed in the above embodiments. For example, some components may be deleted from all the components described in the embodiments. Furthermore, components in different embodiments may be appropriately combined.

<Supplementary Note 1>

There may be provided a pump system including

a storage that
stores model identification information for identifying a model of the pump, and characteristic data of a total lift and a discharge flow rate in a case where an induction motor operates the pump, in association with each other, and stores the model identification information for identifying the model of the pump, and the characteristic data of the total lift and the discharge flow rate in a case where a synchronous motor operates the pump, for each operation frequency,
an acquirer that acquires a discharge flow rate of a target pump in addition to model identification information of the target pump or acquires a set of discharge pressure, suction pressure, and a cage height in addition to the model identification information of the target pump, and
a determiner that
in a case where the discharge flow rate of the target pump is acquired,
specifies the total lift corresponding to the discharge flow rate with reference to the characteristic data corresponding to the model identification information of the target pump in the storage, and
determines the operation frequency by performing collation with the characteristic data of the total lift and the discharge flow rate for each operation frequency in the storage in a case where the synchronous motor operates the pump, such that the discharge flow rate and the lift are obtained, or
in a case where the set of the discharge pressure, the suction pressure, and the cage height is acquired,
determines the total lift by using the discharge pressure, the suction pressure, and the cage height,
specifies the discharge flow rate corresponding to the total lift with reference to the characteristic data of the total lift and the discharge flow rate in the storage in a case where the induction motor operates the pump, and
determines the operation frequency of the inverter by performing collation with the characteristic data of the total lift and the discharge flow rate for each operation frequency in the storage in a case where the synchronous motor operates the pump, such that the discharge flow rate and the lift are obtained.

<Supplementary Note 2>

There may be provided an information processing device that is able to use, as a reference, a storage that

stores model identification information for identifying a model of the pump, and characteristic data of a total lift and a discharge flow rate in a case where an induction motor operates the pump, in association with each other, and stores the model identification information for identifying the model of the pump, and the characteristic data of the total lift and the discharge flow rate in a case where a synchronous motor operates the pump, for each operation frequency,
the information processing device includes
an acquirer that acquires a discharge flow rate of a target pump in addition to model identification information of the target pump or acquires a set of discharge pressure, suction pressure, and a cage height in addition to the model identification information of the target pump, and
a determiner that
in a case where the discharge flow rate of the target pump is acquired,
specifies the total lift corresponding to the discharge flow rate with reference to the characteristic data corresponding to the model identification information of the target pump in the storage, and
determines the operation frequency by performing collation with the characteristic data of the total lift and the discharge flow rate for each operation frequency in the storage in a case where the synchronous motor operates the pump, such that the discharge flow rate and the lift are obtained, or
in a case where the set of the discharge pressure, the suction pressure, and the cage height is acquired,
determines the total lift by using the discharge pressure, the suction pressure, and the cage height,
specifies the discharge flow rate corresponding to the total lift in the characteristic data of the total lift and the discharge flow rate in the storage in a case where the induction motor operates the pump, and
determines the operation frequency of the inverter by performing collation with the characteristic data of the total lift and the discharge flow rate for each operation frequency in the storage in a case where the synchronous motor operates the pump, such that the discharge flow rate and the lift are obtained.

<Supplementary Note 3>

There may be provided an information processing method including a step of acquiring a discharge flow rate of a target pump in addition to model identification information of the target pump, or acquiring a set of discharge pressure, suction pressure, and a cage height in addition to the model identification information of the target pump, and a step of, in a case where the discharge flow rate of the target pump is acquired, specifying a total lift corresponding to the discharge flow rate with reference to characteristic data corresponding to the model identification information of the target pump, and determining an operation frequency of an inverter by performing collation with characteristic data of the total lift and the discharge flow rate for each operation frequency in a case where a synchronous motor operates the pump, such that the discharge flow rate and the lift are obtained, or in a case where the set of the discharge pressure, the suction pressure, and the cage height is acquired, determining the total lift by using the discharge pressure, the suction pressure, and the cage height, specifying the discharge flow rate corresponding to the total lift in the characteristic data of the total lift and the discharge flow rate in a case where an induction motor operates the pump, and determining the operation frequency of the inverter by performing collation with the characteristic data of the total lift and the discharge flow rate for each operation frequency in a case where the synchronous motor operates the pump, such that the discharge flow rate and the lift are obtained.

Reference Signs List

1       inverter board
10      inverter-integrated motor
11      inverter
2       motor
3       pump
4       information processing device
41      communication interface

| 42 | storage |
| --- | --- |
| 43 | processor |
| 431 | acquirer |
| 432 | determiner |
| 433 | controller |
| 5 | ultrasonic flowmeter |
| 61 | pressure sensor |
| 62 | pressure sensor |
| 63 | water tub |
| 9 | Terminal |
| S | pump system |

**Claims**

1. A fluid machine system that determines an operation frequency of an inverter connected to a target fluid machine including a rotor blade, the fluid machine system comprising:

   a storage that stores model identification information for identifying a model of a fluid machine including a rotor blade, and characteristic data of a total lift and a discharge flow rate or characteristic data of static pressure and a discharge air volume in a case where an induction motor operates the fluid machine, in association with each other, and stores the model identification information for identifying the model of the fluid machine including the rotor blade, and the characteristic data of the total lift and the discharge flow rate or the characteristic data of the static pressure and the discharge air volume in a case where a synchronous motor operates the fluid machine, for each operation frequency;
   an acquirer that acquires a discharge flow rate or a discharge air volume of the target fluid machine in addition to model identification information of the target fluid machine or acquires a set of discharge pressure, suction pressure, and a cage height in addition to the model identification information of the target fluid machine; and
   a determiner that in a case where the discharge flow rate or the discharge air volume of the target fluid machine is acquired, specifies the total lift corresponding to the discharge flow rate or the static pressure corresponding to the discharge air volume with reference to the characteristic data corresponding to the model identification information of the target fluid machine in the storage, and determines the operation frequency of the inverter by performing collation with the characteristic data of the total lift and the discharge flow rate for each operation frequency or the characteristic data of the static pressure and the discharge air volume for each operation frequency in the storage in a case where the synchronous motor operates the fluid machine, such that the discharge flow rate and the lift are obtained or the discharge air volume and the static pressure are obtained, or in a case where the set of the discharge pressure, the suction pressure, and the cage height is acquired, determines the total lift or the static pressure by using the discharge pressure, the suction pressure, and the cage height, specifies the discharge flow rate corresponding to the total lift or the discharge air volume corresponding to the static pressure by using the characteristic data of the total lift and the discharge flow rate or the characteristic data of the static pressure and the discharge air volume with reference to the storage in a case where the induction motor operates the fluid machine, and determines the operation frequency of the inverter by performing collation with the characteristic data of the total lift and the discharge flow rate for each operation frequency or the characteristic data of the static pressure and the discharge air volume for each operation frequency with reference to the storage in a case where the synchronous motor operates the fluid machine, such that the specified discharge flow rate and the lift are obtained or the specified discharge air volume and the determined static pressure are obtained.

2. The fluid machine system according to claim 1, wherein

   the target fluid machine including the rotor blade is a pump,
   the storage stores model identification information for identifying a model of the pump, and characteristic data of a total lift and a discharge flow rate in a case where an induction motor operates the pump, in association with each other, and stores the model identification information for identifying the model of the pump, and the characteristic data of the total lift and the discharge flow rate in a case where a synchronous motor operates the pump, for each operation frequency,
   the acquirer acquires a discharge flow rate of a target pump in addition to model identification information of the target pump or acquires a set of discharge pressure, suction pressure, and a cage height in addition to the model identification information of the target pump, and

the determiner in a case where the discharge flow rate of the target pump is acquired, specifies the total lift corresponding to the discharge flow rate with reference to the characteristic data corresponding to the model identification information of the target pump in the storage, and determines the operation frequency by performing collation with the characteristic data of the total lift and the discharge flow rate for each operation frequency with reference to the storage in a case where the synchronous motor operates the pump, such that the discharge flow rate and the lift are obtained, or in a case where the set of the discharge pressure, the suction pressure, and the cage height is acquired, determines the total lift by using the discharge pressure, the suction pressure, and the cage height, specifies the discharge flow rate corresponding to the total lift by using the characteristic data of the total lift and the discharge flow rate with reference to the storage in a case where the induction motor operates the pump, and determines the operation frequency of the inverter by performing collation with the characteristic data of the total lift and the discharge flow rate for each operation frequency in the storage in a case where the synchronous motor operates the pump, such that the discharge flow rate and the lift are obtained.

3. The fluid machine system according to claim 1, wherein

the target fluid machine including the rotor blade is a blower,
the storage stores model identification information for identifying a model of the blower, and characteristic data of static pressure and a discharge air volume in a case where an induction motor operates the blower, in association with each other, and stores the model identification information for identifying the model of the blower, and the characteristic data of the static pressure and the discharge air volume in a case where a synchronous motor operates the blower, for each operation frequency,
the acquirer acquires a discharge air volume of a target blower in addition to model identification information of the target blower or acquires a set of discharge pressure, suction pressure, and a cage height in addition to the model identification information of the target blower, and
the determiner in a case where the discharge air volume of the target blower is acquired, specifies the static pressure corresponding to the discharge air volume with reference to the characteristic data corresponding to the model identification information of the target blower in the storage, and determines the operation frequency by performing collation with the characteristic data of the static pressure and the discharge air volume for each operation frequency with reference to the storage in a case where the synchronous motor operates the pump, such that the discharge air volume and the static pressure are obtained, or in a case where the set of the discharge pressure, the suction pressure, and the cage height is acquired, determines the static pressure by using the discharge pressure, the suction pressure, and the cage height, specifies the discharge air volume corresponding to the static pressure by using the characteristic data of the static pressure and the discharge air volume in the storage in a case where the induction motor operates the blower, and determines the operation frequency of the inverter by performing collation with the characteristic data of the static pressure and the discharge air volume for each operation frequency in the storage in a case where the synchronous motor operates the pump, such that the discharge air volume and the static pressure are obtained.

4. The fluid machine system according to any one of claims 1 to 3, further comprising: a controller that controls the inverter such that an output frequency of the inverter becomes the determined operation frequency.

5. The fluid machine system according to claim 4, wherein

the synchronous motor is a PM motor,
the synchronous motor has a setting frequency at which a rated output voltage is reached, the setting frequency being between $50 \times$ (number of poles/2) and $60 \times$ (number of poles/2) Hz, and
in a case where the operation frequency exceeds the setting frequency, the controller controls a current that weakens a magnetic flux of a magnet to flow in the inverter, such that an induced voltage of the synchronous motor becomes equal to or lower than the rated output voltage.

6. The fluid machine system according to any one of claims 1 to 5, wherein the acquirer acquires, via a terminal or a setting device, information of a discharge flow rate or a discharge air volume of a target pump fluid machine in addition to identification information of the target fluid machine, or information of the set of the discharge pressure, the suction pressure, and the cage height in addition to the model identification information of the target fluid machine.

7. The fluid machine system according to any one of claims 1 to 6, wherein the acquirer acquires information of the discharge flow rate or the discharge air volume of the target fluid machine, or information of the set of the discharge pressure, the suction pressure, and the cage height of the target fluid machine by an analog signal from a sensor.

8. The fluid machine system according to any one of claims 1 to 7, wherein
   the synchronous motor is a motor integrated with the inverter.

9. An information processing device that determines an operation frequency of an inverter connected to a target fluid machine including a rotor blade, wherein
   the information processing device is able to use, as a reference, a storage that stores model identification information for identifying a model of a fluid machine including a rotor blade, and characteristic data of a total lift and a discharge flow rate or characteristic data of static pressure and a discharge air volume in a case where an induction motor operates the fluid machine, in association with each other, and stores the model identification information for identifying the model of the fluid machine including the rotor blade, and the characteristic data of the total lift and the discharge flow rate or the characteristic data of the static pressure and the discharge air volume in a case where a synchronous motor operates the fluid machine, for each operation frequency, the information processing device comprises:

   an acquirer that acquires a discharge flow rate or a discharge air volume of the target fluid machine in addition to model identification information of the target fluid machine or acquires a set of discharge pressure, suction pressure, and a cage height in addition to the model identification information of the target fluid machine; and
   a determiner that in a case where the discharge flow rate or the discharge air volume of the target pump fluid machine is acquired, specifies the total lift corresponding to the discharge flow rate or the static pressure corresponding to the discharge air volume with reference to the characteristic data corresponding to the model identification information of the target fluid machine in the storage, and determines the operation frequency of the inverter by performing collation with the characteristic data of the total lift and the discharge flow rate for each operation frequency or the characteristic data of the static pressure and the discharge air volume for each operation frequency with reference to the storage in a case where the synchronous motor operates the fluid machine, such that the discharge flow rate and the lift are obtained or the discharge air volume and the static pressure are obtained, or in a case where the set of the discharge pressure, the suction pressure, and the cage height is acquired, determines the total lift or the static pressure by using the discharge pressure, the suction pressure, and the cage height, specifies the discharge flow rate corresponding to the total lift or the discharge air volume corresponding to the static pressure in the characteristic data of the total lift and the discharge flow rate or the characteristic data of the static pressure and the discharge air volume in the storage in a case where the induction motor operates the fluid machine, and determines the operation frequency of the inverter by performing collation with the characteristic data of the total lift and the discharge flow rate for each operation frequency or the characteristic data of the static pressure and the discharge air volume for each operation frequency with reference to the storage in a case where the synchronous motor operates the fluid machine, such that the specified discharge flow rate and the lift are obtained or the specified discharge air volume and the determined static pressure are obtained.

10. An information processing method of determining an operation frequency of an inverter connected to a target fluid machine including a rotor blade, the information processing method comprising:

   a step of acquiring a discharge flow rate or a discharge air volume of the target fluid machine in addition to model identification information of the target fluid machine, or acquiring a set of discharge pressure, suction pressure, and a cage height in addition to the model identification information of the target fluid machine; and
   a step of in a case where the discharge flow rate or the discharge air volume of the target fluid machine is acquired, specifying a total lift corresponding to the discharge flow rate or static pressure corresponding to the discharge air volume with reference to characteristic data corresponding to the model identification information of the target fluid machine, and determining the operation frequency of the inverter by performing collation with characteristic data of the total lift and the discharge flow rate for each operation frequency or characteristic data of the static pressure and the discharge air volume for each operation frequency in a case where a synchronous motor operates the fluid machine, such that the discharge flow rate and the lift are obtained or the discharge air volume and the static pressure are obtained, or in a case where the set of the discharge pressure, the suction pressure, and the cage height is acquired, determining the total lift or the static pressure by using the discharge pressure, the suction pressure, and the cage height, specifying the discharge flow rate corresponding to the total lift or the discharge air volume corresponding to the static pressure in the characteristic data of the total lift and the discharge flow rate or the characteristic data of the static pressure and the discharge air volume in a case where an induction motor operates the fluid machine, and determining the operation frequency of the inverter by performing collation with the characteristic data of the total lift and the discharge flow rate for each operation frequency or the characteristic data of the static pressure and the discharge air volume for each operation frequency in a case where the synchronous motor operates the fluid machine, such that the specified discharge flow rate and the lift are obtained or the specified discharge air volume and the determined static pressure are obtained.

# FIG. 1

# FIG. 2

# FIG. 3

S

INVERTER-INTEGRATED MOTOR — 10

PUMP — 3

MOTOR — 2

INVERTER BOARD — 1

INVERTER — 11

4

TERMINAL — 9

# FIG. 4

**INVERTER BOARD** (1)

**INFORMATION PROCESSING DEVICE** (4)

**PROCESSOR** (43)

- ACQUIRER (431)
- DETERMINER (432)
- CONTROLLER (433)

**COMMUNICATION INTERFACE** (41)

**STORAGE** (42)

**INVERTER** (11)

(9)

# FIG. 5

T1

| PUMP MODEL CODE | DISCHARGE FLOW RATE | TOTAL LIFT |
|---|---|---|
| 0001 | 200 | 100 |
| . . . | . . . | . . . |
| 0001 | 5000 | 50 |
| . . . | . . . | . . . |
| 0002 | 200 | 90 |
| . . . | . . . | . . . |
| 0002 | 5000 | 40 |
| . . . | . . . | . . . |

# FIG. 6

T2-N

T2-2

T2-1

| PUMP MODEL CODE | DISCHARGE FLOW RATE | TOTAL LIFT |
|---|---|---|
| 0001 | 200 | 100 |
| ... | ... | ... |
| 0001 | 5000 | 50 |
| ... | ... | ... |
| 0002 | 200 | 90 |
| ... | ... | ... |
| 0002 | 5000 | 40 |
| ... | ... | ... |

25

# FIG. 7

# FIG. 8

# FIG. 9

### CASE OF BEING SEPARATED AT 50Hz/60Hz

OUTPUT VOLTAGE

200V — W1 — W2

50Hz MOTOR

60Hz MOTOR

50Hz   60Hz   FREQUENCY

POWER

○○KW — W3 — W4

50Hz MOTOR

60Hz MOTOR

50Hz   60Hz   FREQUENCY

### CASE OF BEING USED BOTH AT 50Hz/60Hz

OUTPUT VOLTAGE

200V — W5

50Hz/60Hz DUAL MOTOR

50Hz   60Hz   FREQUENCY

POWER

○○KW — W6 — W7

50Hz   60Hz   FREQUENCY

# FIG. 10

CASE WHERE BOTH MOTOR AND PUMP
ARE SEPARATED AT 50Hz/60Hz

CASE WHERE PUMPS FOR 50Hz AND 60Hz
ARE APPLIED TO 60Hz MOTOR

OUTPUT VOLTAGE — 200V — W11 — W12 — FOR 50Hz — FOR 60Hz — 50Hz — 60Hz — FREQUENCY

OUTPUT VOLTAGE — 200V — W17 — 50Hz PUMP — 60Hz PUMP — 50Hz — 60Hz — FREQUENCY

POWER/CURRENT — ○○KW — W13 — W14 — FOR 50Hz — W15 — W16 — FOR 60Hz — □□A — 50Hz — 60Hz — FREQUENCY

POWER/CURRENT — ○○KW — W18 — W19 — 50Hz PUMP — 60Hz PUMP — R1 — □□A — W20 — 50Hz — 60Hz — W21 — FREQUENCY

EP 4 417 815 A1

# FIG. 11

FIRST EXAMPLE IN CASE WHERE PUMPS
FOR 50Hz AND 60Hz ARE APPLIED TO DUAL MOTOR

OUTPUT
VOLTAGE

W31

200V

BOTH 50Hz
AND 60Hz USED

50Hz        60Hz    FREQUENCY

POWER/
CURRENT

W32    W33

○○KW

W34

□□A

W35

50Hz        60Hz    FREQUENCY

# FIG. 12

SECOND EXAMPLE IN CASE WHERE PUMPS
FOR 50Hz AND 60Hz ARE APPLIED TO DUAL MOTOR

OUTPUT
VOLTAGE

W41

200V

BOTH 50Hz
AND 60Hz USED

50Hz f0    60Hz    FREQUENCY

POWER/
CURRENT

W42    W43

○○KW

□□A

W44

50Hz    60Hz    FREQUENCY

W45

FIG. 13

USUAL (Id=0)

WEAK MAGNETIC FIELD (Id<0)

# FIG. 14

# FIG. 15

## FIG. 16

Sa

**INVERTER-INTEGRATED MOTOR** 10

3a
**BLOWER**

2
**MOTOR**

1
**INVERTER BOARD**

**INVERTER** 11

4

9
**TERMINAL**

# FIG. 17

T1a

| BLOWER MODEL CODE | DISCHARGE AIR VOLUME | STATIC PRESSURE |
|---|---|---|
| 0001 | 200 | 100 |
| . . . | . . . | . . . |
| 0001 | 5000 | 50 |
| . . . | . . . | . . . |
| 0002 | 200 | 90 |
| . . . | . . . | . . . |
| 0002 | 5000 | 40 |
| . . . | . . . | . . . |

# FIG. 18

| BLOWER MODEL CODE | DISCHARGE AIR VOLUME | STATIC PRESSURE |
|---|---|---|
| 0001 | 200 | 100 |
| ... | ... | ... |
| 0001 | 5000 | 50 |
| ... | ... | ... |
| 0002 | 200 | 90 |
| ... | ... | ... |
| 0002 | 5000 | 40 |
| ... | ... | ... |

## FIG. 19

## FIG. 20

## INTERNATIONAL SEARCH REPORT

| International application No. |
| --- |
| **PCT/JP2022/036620** |

**A.    CLASSIFICATION OF SUBJECT MATTER**

*F04D 15/00*(2006.01)i; *F04D 27/00*(2006.01)i
FI:   F04D15/00 Z; F04D27/00 Z

According to International Patent Classification (IPC) or to both national classification and IPC

**B.    FIELDS SEARCHED**

Minimum documentation searched (classification system followed by classification symbols)

F04D15/00; F04D27/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 99/51883 A1 (EBARA CORP.) 14 October 1999 (1999-10-14)<br>description, p. 1, line 1 to p. 51, line 6, fig. 1-43B | 1-10 |
| A | JP 2000-18170 A (EBARA CORP.) 18 January 2000 (2000-01-18)<br>paragraphs [0001]-[0043], fig. 1-8 | 1-10 |

| ☐ Further documents are listed in the continuation of Box C. | ☑ See patent family annex. |
| --- | --- |

| *    Special categories of cited documents: | "T"    later document published after the international filing date or priority date and not in conflict with the application but cited to understand the principle or theory underlying the invention |
| --- | --- |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **15 November 2022** | **29 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| | | | | International application No.<br>**PCT/JP2022/036620** |
|---|---|---|---|---|

| Patent document<br>cited in search report | | | Publication date<br>(day/month/year) | Patent family member(s) | Publication date<br>(day/month/year) |
|---|---|---|---|---|---|
| WO | 99/51883 | A1 | 14 October 1999 | EP 1072795 A1<br>paragraphs [0001]-[0197], fig.<br>1-43B<br>JP 2003-90288 A<br>AU 3053799 A1<br>CN 1303467 A | |
| JP | 2000-18170 | A | 18 January 2000 | (Family: none) | |

Form PCT/ISA/210 (patent family annex) (January 2015)

**EP 4 417 815 A1**

**REFERENCES CITED IN THE DESCRIPTION**

**Patent documents cited in the description**

- JP 2005171788 A

- JP 2021087300 A